# EUROPEAN PATENT SPECIFICATION

(11) **EP 1 555 844 B1**
(45) Date of publication and mention of the grant of the patent: **07.03.2007**
(21) Application number: 04000560.5
(22) Date of filing: 13.01.2004
(51) Int. Cl.: H04Q 7/38

(54) **Method, apparatus and network arrangement for establishing calls in a communication network**
Verfahren, Vorrichtung und Netzwerkanordnung zum Verbindungsaufbau in einem Kommunikationsnetz
Procédé, appareill et configuration de réseau pour établir des connextions dans un réseau de commnunication

(43) Date of publication of application: 20.07.2005
(73) Proprietor: SIEMENS AKTIENGESELLSCHAFT, 80333 München (DE)
(72) Inventor: Schwarzbauer, Hanns Jürgen, Dr., 82194 Gröbenzell (DE); Verwimp, Gery, 2140 Borgerhout (BE)

(56) References cited:
- WO-A-02/091717
- US-A- 6 006 094
- US-A- 6 101 382
- US-A1- 2003 114 154

## Description

The present invention relates to an optimized method, apparatus and network arrangement for establishing calls in a communications network comprising a fixed network section and a mobile network section. More particularly, the present invention relates to an optimized method, apparatus and network arrangement for facilitating PSTN originating mobile terminating calls (MTCs) not requiring a gateway node.

Modern communications networks generally carry two types of traffic or data. The first is the traffic which is transmitted by or delivered to a user or subscriber, and which is usually paid for by the user. That type of traffic is widely known as user traffic or subscriber traffic. The second is the traffic caused by network management applications in sending and receiving management data from network elements, known as management traffic.

In telecommunications, the management traffic is also known as signaling traffic. The term "signaling" refers to the exchange of signaling messages between various network elements such as database servers, local exchanges, transit exchanges and user terminals. A well known protocol for transferring such signaling messages is the Signaling System 7 (SS7), also referred to as Common Channel Signaling System 7 (CCS7).

The Signaling System 7 as specified by the International Telecommunication Union (ITU) in the Q.700-series standards provides for all signaling tasks in today's telecommunications networks. More specifically, SS7 provides for example for:
- basic call setup, management, and tear down;
- enhanced call features such as call forwarding, calling party name/number display, and three-way calling;
- accounting and billing;
- database operations for services such as authentication, roaming, toll-free services and special tariff services;
- network management for the SS7 network and its connections; and
- non-call related signaling, allowing for services such as short message service (SMS), ISDN Supplementary Services and user-to-user signaling (UUS).

The Signaling System 7 forms an independent network, in which SS7 messages are exchanged between network elements over bidirectional channels called signaling links. Signaling occurs out-of-band on dedicated channels rather than in-band on channels reserved for user traffic such as voice. Compared to in-band signaling, out-of-band signaling provides:
- faster call setup times;
- more efficient use of voice circuits; and
- support for Intelligent Network (IN) services which require signaling to network elements without voice trunks (e.g., database systems).

The elements of a SS7 network are known as signaling points, each uniquely identified by a signaling point code. Point codes are carried in signaling messages exchanged between signaling points to identify the source and destination of each message. Each signaling point uses a routing table to select the appropriate signaling path for each message.

There are essentially three kinds of signaling points in a SS7 network: Service Switching Points (SSPs), Signaling Transfer Points (STPs), and Service Control Points (SCPs).

SSPs are switches that originate, terminate, or tandem calls. An SSP sends signaling messages to other SSPs to setup, manage, and release voice circuits required to complete a call. An SSP may also send a query message to a centralized database (an SCP) to determine how to route a call (e.g., a toll-free call). An SCP sends a response to the originating SSP containing the routing number(s) associated with the dialed number.

Network traffic between signaling points may be routed via signaling transfer points (STPs). An STP routes each incoming message to an outgoing signaling link based on routing information contained in the SS7 message. Because it acts as a network hub, an STP provides improved utilization of the SS7 network by eliminating the need for direct links between signaling points. An STP may perform global title translation, a procedure by which the destination signaling point is determined from digits present in the signaling message (e.g., the dialed 800 number, calling card number, or mobile subscriber identification number).

Traditionally, a distinction is made between two types of telecommunications networks which both employ the principles laid out above: a first network serving fixed or wireline subscribers, known as public switched telephone network (PSTN) and a second network serving mobile users, known as public land mobile network (PLMN).

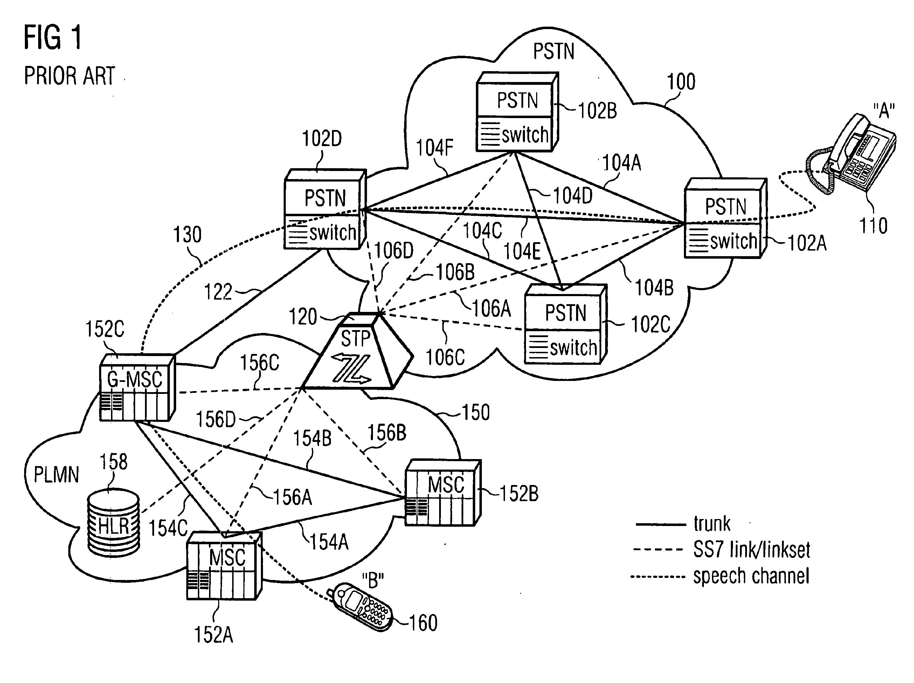

A typical network setup involving a PSTN 100 and a PLMN 150 is schematically shown in Fig. 1. Multiple PSTN switches or exchanges 102A..D represent the network nodes of PSTN 100. Between PSTN switches 102A..D there are provided voice and data trunks 104A..F for carrying subscriber traffic. At least one STP 120 is provided for routing the signaling traffic as explained above. All PSTN switches 102A..D are connected to STP 120 via signaling links or linksets 106A..D. An exemplary PSTN subscriber 110 is assumed to be connected to a first PSTN switch 102A.

The PLMN section 150 of the network arrangement as shown in Fig. 1 is comprised of several PLMN switches, known in the art as mobile switching centers MSC 152A..C. Between MSCs 152A..C there are provided voice and data trunks 154A..C for carrying subscriber traffic. The exemplary, simplified arrangement of Fig. 1 is such that the PSTN section 100 and the PLMN section 150 share the STP 120. Consequently, all MSCs 152A..C are connected to STP 120 via signaling links or linksets 156A..C. An exemplary mobile subscriber 160 is assumed to be currently served by a first MSC 152A. The PLMN section 150 further requires at least one database (which may be considered to functionally be an SCP) in which subscriber information is stored. That database is known as the home location register HLR 158 and connected to the signaling network via link/linkset 156D.

Note that in existing network configurations involving a PSTN portion 100 and a PLMN portion 150 there is a single point of entry into the PLMN for calls originating in the PSTN. This point is called Gateway-MSC or G-MSC 152C. While all MSCs 152A..C have the ability to query PLMN databases to determine the MSC currently serving a called mobile subscriber, PSTN switches do not have that ability, necessitating a network arrangement involving one or more G-MSCs to which all mobile terminated calls (MTC), i.e. calls to mobile subscribers, that originate in the PSTN are routed, such as the call represented by dashed line or path 130. A network arrangement and a method for placing a call from a PSTN to a PLMN using a G-MSC is for example disclosed in US 6,101,382 A.

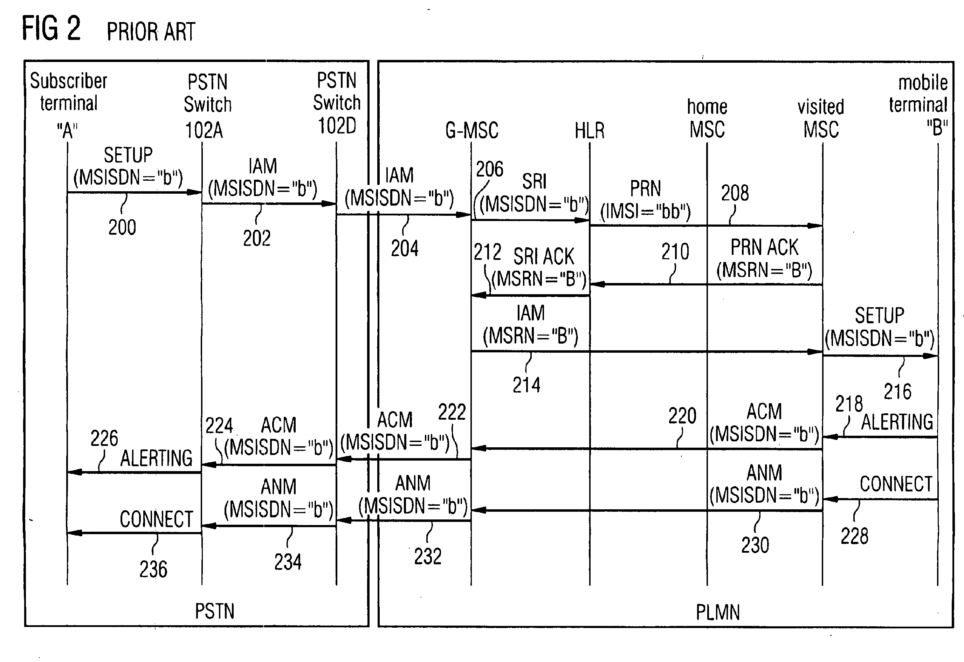

To illustrate, a call from PSTN subscriber 110 to mobile subscriber 160 is considered. Fig. 2 shows a detailed call setup procedure for setting up a call from PSTN subscriber 110 (also referenced as "A"-subscriber) to mobile subscriber 160 (also referenced as "B"-subscriber). The called party number "b", which in this case is a MSISDN, is transferred from the calling party's terminal "A" by means of SETUP and IAM messages to the G-MSC 152C (steps 200-204). There, an interrogation message is generated and sent to the appropriate HLR 158 (step 206), which in turn requests a roaming number from the visited MSC (i.e. the MSC currently serving the called mobile subscriber) (step 208). This roaming number is provided to the HLR and from there to the G-MSC (steps 210-212). The G-MSC then initiates a call setup to the called party using said roaming number (steps 214-216). The called terminal, if ready to receive calls, will alert the subscriber, and an alerting notification will be transferred to the calling subscriber (steps 218-226). Upon answering the call by the called party, a speech path 130 is established by signaling ANSWER messages correspondingly through the network (steps 228-236).

A network arrangement as shown in Fig. 1 has several disadvantages. For any MTC originating in the PSTN, a speech path 130 will traverse multiple PSTN switches and MSCs before reaching the MSC currently serving the called mobile subscriber. Consequently, resources will have to be allocated in all exchanges along speech path 130. Moreover, since the G-MSCs 152C handles all traffic between PSTN 100 and PLMN 150, these switches carry a high traffic load and, for each trunk connected to PSTN 100, require a corresponding trunk to another MSC.

These disadvantages are especially unacceptable in situations where a PSTN 100 and a PLMN 150 are operated by the same operator. For an operator owning both a PSTN and a PLMN, it would be highly desirable to have a minimum number of switches (PLMN and PSTN accumulated) in an active speech/data MTC. It would further be desirable to eliminate the need for a dedicated G-MSC.

It is therefore an object of the present invention to provide a novel method for establishing calls in a communications network. It is a further object of the invention to provide an improved signaling transfer point. It is yet another object of the present invention to provide a network arrangement facilitating PSTN originating MTCs which does not require a gateway node.

In accordance with the foregoing objectives, there is provided by the invention a method for establishing calls in a communications network comprising a fixed network section and a mobile network section, the method comprising the steps of:
- in the fixed network section of said communications network, receiving a called party address from a calling party served by a fixed network switch;
- determining if a called party addressed by said called party address is a mobile called party served by the mobile network section of the communications network;
- in response to determining that the called party is a mobile called party, routing signaling messages associated with the establishment of the call to a fixed network node capable of initiating queries to and receiving responses from a home location register of the mobile network section;
- at said fixed network node, initiating a query to a home location register associated with the mobile called party and receiving a roaming number for that mobile called party; and
- from the fixed network switch serving the calling party, directly routing the call to a mobile network switch currently serving the mobile called party based on the roaming number.

The determination if a called party addressed by said called party address is a mobile called party served by the mobile network section may be made by any fixed network switch, including the fixed network switch serving the calling party.

In one embodiment of the invention, the number portability mechanism is advantageously used for determining calls to mobile called party addresses and routing queries associated with such calls to a centralized node. Using this approach, only the centralized node needs to have the capability to perform the necessary query to the mobile network home location register (HLR). Unlike the prior art G-MSC, the inventive centralized node only handles the signaling involved with querying the HLR. Therefore, the load at the inventive centralized node will be significantly less than that at a prior art G-MSC, which additionally handles all trunk traffic (voice and data).

A suitable centralized node is a signaling transfer point (STP) in combination with a number portability (NP) database.

In another embodiment of the invention, an intelligent network (IN) function is used for determining calls to mobile called party addresses and routing queries associated with such calls to a centralized node, wherein the centralized node is an SCP in the fixed network section.

In accordance with the invention there is also provided a STP of a SS7 network, comprising:
- means for bidirectionally connecting to a plurality of SS7 links, each of said SS7 links linking the STP to other SS7 entities;
- means for receiving a number portability query from a fixed network section of the network;
- means for querying a number portability database for determining if a called party address received in a number portability query is a mobile called party served by a mobile network section of the network;
- in response to determining that the called party is a mobile called party, initiating a query to a home location register associated with the mobile called party and receiving a roaming number for that mobile called party; and
- returning the roaming number as a response to the number portability query.

The STP and the NP database may be comprised in one network node.

In accordance with the present invention, there is also provided a network arrangement for a communications network, comprising:
- a fixed network section, the fixed network section comprising: a plurality of subscriber terminals; a plurality of fixed network switches; voice connections for interconnecting the fixed network switches; and signaling connections for connecting the fixed network switches to at least one signaling transfer point;
- a mobile network section, the mobile network section comprising: a plurality of mobile subscriber terminals; a plurality of mobile network switches; voice connections for interconnecting the mobile network switches; a home location register; and signaling connections for connecting the mobile network switches and the home location register to at least one signaling transfer point;
- the fixed network section further comprising a fixed network node capable of initiating queries to and receiving responses from the home location register of the mobile network section;
- wherein at least one or all of the fixed network switches comprise: means for determining if a call originating in the fixed network section is terminating in the mobile network section; means for routing signaling messages associated with the establishment of a call terminating in the mobile network section to said fixed network node for obtaining a roaming number for completing the call; and means for directly routing the call to a mobile network switch currently serving a mobile called party based on the roaming number.

In alternative preferred embodiments of the network arrangement either the NP mechanism or the IN mechanism can be used for determining MTCs and handling the queries to the HLR of the mobile network section. The inventive network arrangement may employ an inventive STP.

One advantage of the invention is that there is no longer a need for a dedicated G-MSC. G-MSCs in prior networks are highly loaded network elements which were expensive to set up and maintain because every voice connection between the fixed network or PSTN and the mobile network or PLMN was routed via a G-MSC, which in turn had to have enough trunks to a large number of PSTN switches and MSCs to support the desired number of successful call attempts.

That advantage is achieved without modifying the present PSTN switches, provided these switches support some database mechanism that allows them to send queries to a central node. Examples of such mechanisms are the number portability mechanism or the intelligent network mechanism. Then, the required modifications at the PSTN switches are limited to modifying the databases that control these mechanisms which is a simple network management task. Only one or, (in larger or redundant network configurations) a few central nodes need to have the capability to query the HLR. In that lies a substantial advantage over a (theoretically possible) solution of enabling every PSTN switch to query the HLR directly. Such a theoretical solution would require modifications in every PSTN switch, whereas the present invention does not require any such modifications in the PSTN switches.

Under the teachings of the present invention, only the signaling associated with setting up a call from the PSTN to the PLMN is routed via a central node. That central node is disconnected from the call once a roaming number is retrieved from the HLR. Therefore, the load of such a node is much smaller than that of a prior art G-MSC. A suitable central node is a Signaling Transfer Point STP.

In addition, since calls can be routed most directly from the originating PSTN switch to the destination PLMN switch, the load of other network nodes that were previously required for the originating PSTN switch to reach the G-MSC can be reduced by deploying the present invention.

The present invention is particularly useful in communications networks comprising a PSTN section and a PLMN section which are owned by one operator. For such an operator, the few additional benefits of a G-MSC, this for example may be acting as a network boundary element where calls can be screened and monitored and which may therefore provide network security and overload control functions, have no value. Such an operator can manage the network in its entirety more effectively.

In the following, the invention will be described in more detail in the form of advantageous embodiments which are better understood in accordance with the enclosed drawings.
Fig. 1 shows an exemplary prior art network arrangement involving a G-MSC for routing calls from a PSTN to a PLMN.
Fig. 2 shows an exemplary message flow in a network arrangement according to Fig. 1.
Fig. 3 shows an exemplary network arrangement in accordance with the present invention.
Fig. 4 shows an exemplary message flow in a network arrangement according to Fig. 3.
Fig. 5 shows an exemplary message flow in a network arrangement similar to that of Fig. 3 involving an intelligent network service control point.
Fig. 6 shows another exemplary message flow in a network arrangement according to Fig. 3.

Figs. 1 and 2, as explained in detail above, schematically show a typical network setup involving a PSTN 100 and a PLMN 150 and a corresponding message flow for the setup of a call originating in the PSTN 100 and terminating in the PLMN 150, where the call setup and the established call involve a G-MSC 152C.

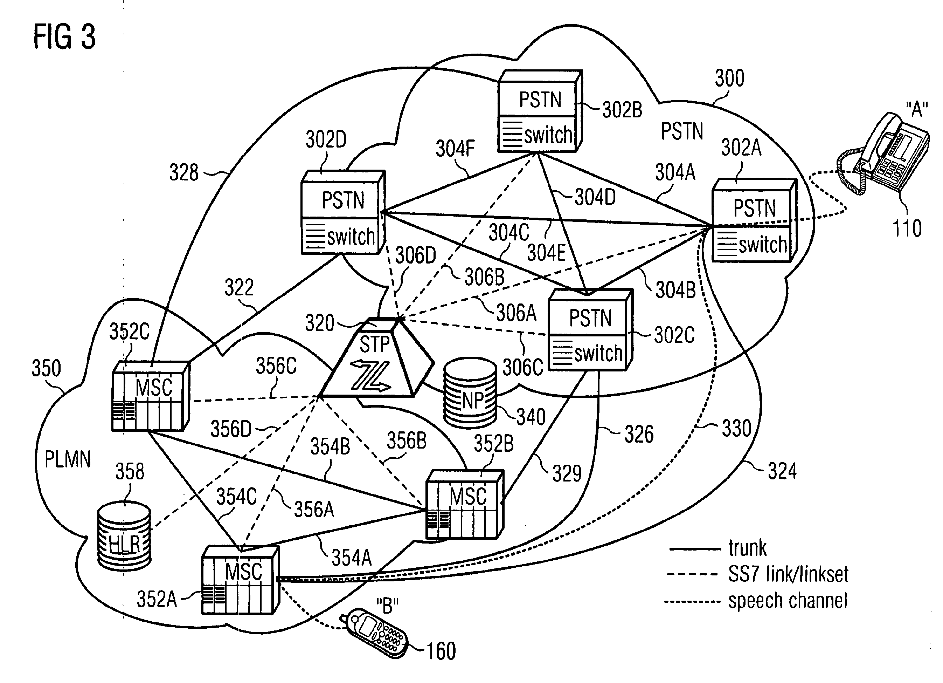

Turning now to Fig. 3, there is shown one preferred embodiment of a network arrangement in accordance with the present invention. The network arrangement of Fig. 3 again involves a PSTN 300 and a PLMN 350. Multiple PSTN switches or exchanges 302A..D represent the network nodes of PSTN 300. Between PSTN switches 302A..D there are provided voice and data trunks 304A..F for carrying subscriber traffic. At least one STP 320 is provided for routing the signaling traffic. All PSTN switches 302A..D are connected to STP 320 via signaling links or linksets 306A..D. The exemplary PSTN subscriber 110 is assumed to be connected to a first PSTN switch 302A.

The PLMN section 350 of the network arrangement as shown in Fig. 3 is comprised of several PLMN switches, known in the art as mobile switching centers MSC 352A..C. Between MSCs 352A..C there are provided voice and data trunks 354A..C for carrying subscriber traffic. The exemplary, simplified arrangement of Fig. 3 is such that the PSTN section 300 and the PLMN section 350 share the STP 320. Consequently, all MSCs 352A..C are connected to STP 320 via signaling links or linksets 356A..C. The exemplary mobile subscriber 160 is assumed to be currently served by a first MSC 352A. The PLMN section 350 further requires at least one database in which subscriber information is stored. That database is known as the home location register HLR 358 and connected to the signaling network via link/linkset 356D.

Note that in a network arrangement according to the invention there is no longer a single point of entry into PLMN 350 for calls originating in PSTN 300. To facilitate voice and data connections between subscribers of PSTN 300 and PLMN 350, trunks are provided between selected or all PSTN switches and MSCs, as shown by the exemplary trunks 322, 324, 326, 328 and 329. Since the MSC 352C is not acting as a G-MSC, the bandwidth of voice and data connections 322 may be configured to be much smaller than that of voice and data connection 122 of Fig. 1.

STP 320 is connected to a number portability database 340, for example by means of signaling links - not shown. In an alternative, number portability database 340 may be implemented in STP 320.

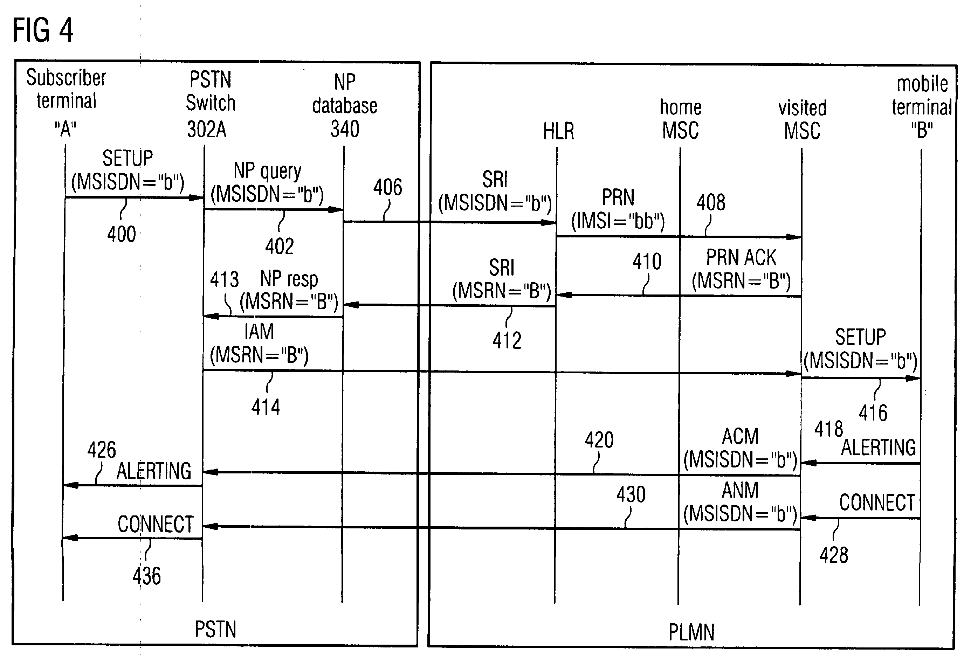

To illustrate, the same connection request as in Fig. 1 from PSTN subscriber 110 to mobile subscriber 160 is considered. Fig. 4 shows a detailed call setup procedure for setting up a call from PSTN subscriber 110 (also referenced as "A"-subscriber) to mobile subscriber 160 (also referenced as "B"-subscriber). The called party number "b", which in this case is a MSISDN, is recognized in the first PSTN switch 302A as a potentially ported number. Therefore, by means of signaling messages, the first PSTN switch 302A queries the number portability (NP) database 340 (step 402). The NP database 340, or STP 320 in case of a NP database 340 integrated into STP 320, then generates an interrogation message and sends it to the appropriate HLR 358 (step 406), which in turn requests a roaming number from the visited MSC (i.e. the MSC currently serving the called mobile subscriber) (step 408). This roaming number is provided to HLR 358 and from there to NP database 340 (steps 410-412). The NP database then transfers the received roaming number as a response to the NP query to the first PSTN switch 302A (step 413). The PSTN switch then initiates a call setup to the called party using said roaming number (steps 414-416). The called mobile terminal, if ready to receive calls, will alert the subscriber, and an alerting notification will be transferred to the calling subscriber (steps 418-426). Upon answering the call by the called party, a speech/data path 330 is established by signaling ANSWER messages correspondingly through the network (steps 428-436).

In other words, to achieve a most direct routing of mobile terminated calls (MTCs) in the PSTN the mechanism for number portability, which is already widely implemented in PSTN switching equipment, can be used by administratively treating all MTCs as calls to potentially ported subscribers and then, at the NP database or at an STP configured to comprise a NP database, query the HLR and return the roaming number as a result to the origination of the NP query.

It shall be noted that the NP database can also be locally attached, i.e., implemented at each PSTN switch or at a selected number of PSTN switches.

Then, the database changes required in the PSTN switches are minimal and achieved by a one time administrative change. The E.164 numbers that previously resulted in forwarding the call to a G-MSC are now flagged as "potentially ported". This triggers call processing to send an NP query to NP database 340, containing the called party number, or at least parts of it. Upon receipt of this NP query the NP database itself detects that the received E.164 number is a Mobile Subscriber ISDN Number (MSISDN) that needs special treatment. By triggering the same procedures as in an MSC, the NP database sends a Send Routing Information (SRI) message to the HLR of the received called party number. For the HLR, there is no functional difference whether this SRI message is received from a G-MSC or the NP database, as long as the NP database is accessible via the SS7 network. The NP database, after receiving the response from the HLR, containing among others information elements the Mobile Station Roaming Number (MSRN), inserts the received MSRN value in the response back to the switch that generated the query to the NP database. This information is then used by the first PSTN switch 302A to complete the routing of the call and select the proper circuits 324 directly to the MSC currently serving the mobile subscriber 160.

In an alternate embodiment, instead of using the number portability mechanism, an intelligent network (IN) function is used to determine whether a call is a MTC and what the appropriate roaming number is.

The network arrangement is similar to that shown in Fig. 3, except that a service control point (SCP, not shown) will provide the queries to the HLR and the roaming number back to the corresponding PSTN switch. Like a toll free call, for which a query is routed to an SCP for obtaining routing information, all calls relating to mobile subscribers can be routed to an SCP based on a common attribute shared among all mobile subscriber addresses, such as, for example, the mobile number address prefix or other address space properties.

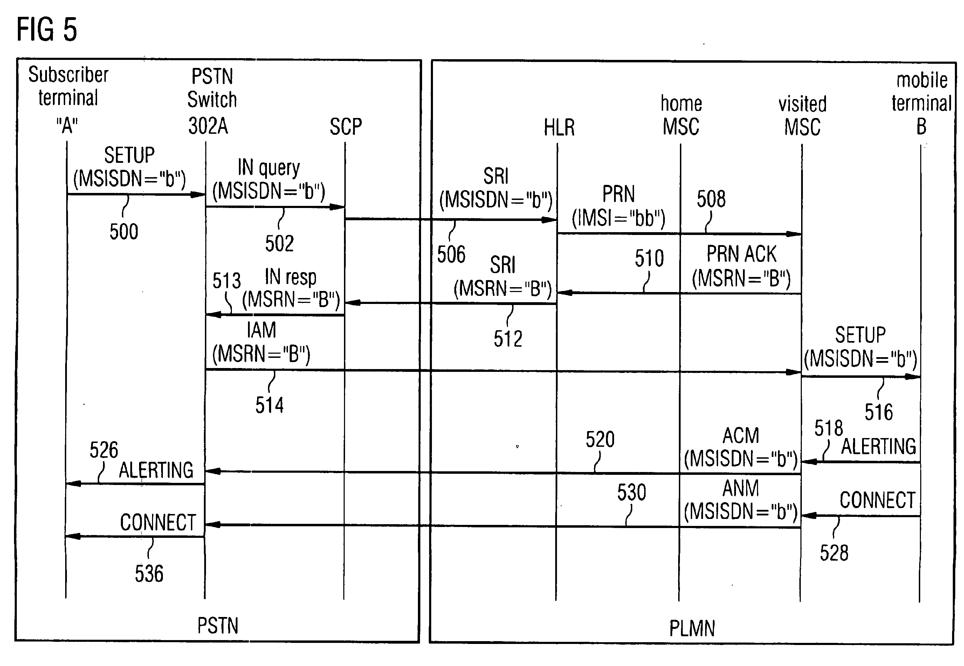

In such a modified network arrangement, again for the connection request from PSTN subscriber 110 to mobile subscriber 160, an exemplary message flow may be as depicted in Fig. 5. Fig. 5 shows a detailed call setup procedure for setting up a call from PSTN subscriber 110 to mobile subscriber 160 ("B"-subscriber). The called party number "b", which in this case is a MSISDN, is recognized in the first PSTN switch 302A as a number requiring IN handling.
Therefore, by means of signaling messages, the first PSTN switch 302A queries an intelligent network service control point (step 502). The SCP then generates an interrogation message and sends it to the appropriate HLR (step 506), which in turn requests a roaming number from the visited MSC (i.e. the MSC currently serving the called mobile subscriber) (step 508). This roaming number is provided to the HLR and from there to the SCP (steps 510-512). The SCP then transfers the received roaming number as a response to the IN query to the first PSTN switch 302A (step 513). As before, the PSTN switch then initiates a call setup to the called party using said roaming number (steps 514-516). The called mobile terminal, if ready to receive calls, will alert the subscriber, and an alerting notification will be transferred to the calling subscriber (steps 518-526). Upon answering the call by the called party, the speech/data path is established by signaling ANSWER messages correspondingly through the network (steps 528-536).

This embodiment of the invention is particularly useful if the PSTN switches do not support number portability. Calls to an E.164 number assigned to a mobile subscriber result in an IN trigger where the received called party number is sent to a Service Control Point (SCP) using INAP messages. The steps performed at the SCP are similar to those at the NP database.

In yet another embodiment of the invention, neither the NP nor the IN mechanisms are employed to query the HLR. For this embodiment it is assumed that all signaling is routed via a central STP 320 (or a set of STPs, not shown), which is a standard setup in today's telecommunications networks. This STP 320 (or the multiple STPs) intercept IAM messages containing E.164 numbers assigned to the PLMN section and then invokes an HLR interrogation.

In turn the ISUP procedure called "crank-back" is invoked, which is a standard procedure used to perform a rudimentary form of number portability support. In case this procedure is supported, the intercepting STP 320 responds to the IAM message with a Clear (CLR) message providing the originating PSTN switch with the MSRN for the called mobile number.

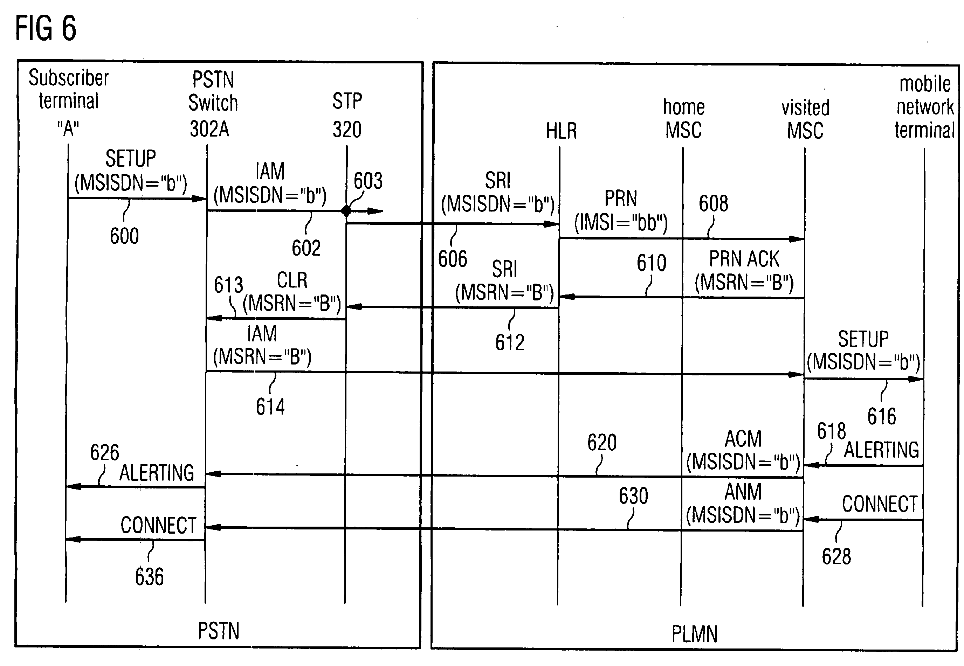

Fig. 6 shows an exemplary call setup procedure for setting up a call from PSTN subscriber 110 to mobile subscriber 160 ("B"-subscriber), wherein the STP intercepts the IAM. The called party number "b", which in this case is a MSISDN, is transferred in an ISUP Initial Address Message (IAM) to STP 320 (step 602). The PSTN switch does not require any knowledge about the called party address. STP 320 intercepts said IAM (step 603) upon recognizing the called party address as a mobile called party address and then generates an interrogation message and sends it to the appropriate HLR (step 606), which in turn requests a roaming number from the visited MSC (i.e. the MSC currently serving the called mobile subscriber) (step 608). This roaming number is provided to the HLR and from there to the STP (steps 610-612). The STP then transfers the received roaming number by means of a CLR message to the first PSTN switch 302A (step 613). As before, the PSTN switch then initiates a call setup to the called party using said roaming number (steps 614-616). The called mobile terminal, if ready to receive calls, will alert the subscriber, and an alerting notification will be transferred to the calling subscriber (steps 618-626). Upon answering the call by the called party, the speech/data path is established by signaling ANSWER messages correspondingly through the network (steps 628-636).

It will be appreciated that the teachings of the present invention apply in various network arrangements including, but not limited to, network arrangements using standard TDM techniques as a transport medium and network arrangements using internet protocol techniques as a transport medium.

It will be further appreciated that, in network arrangements comprising a number of PSTN switches capable of database operations such as NP and IN and also comprising a number of PSTN switches not capable of such operations, calls may be routed to a PSTN switch capable of database operations first, from which a MTC is then most directly routed to the PLMN section.

## Claims

1. A method for establishing calls in a communications network comprising a fixed network section (300) and a mobile network section (350), the method comprising the steps of:
- in the fixed network section (300) of said communications network, receiving a called party address from a calling party (110) served by a fixed network switch (302A);
- determining if a called party addressed by said called party address is a mobile called party (160) served by the mobile network section (350) of the communications network;
**characterized by** the steps of:
- in response to determining that the called party is a mobile called party (160), routing signaling messages associated with the establishment of the call to a fixed network node capable of initiating queries to and receiving responses from a home location register (358) of the mobile network section (350);
- at said fixed network node, initiating a query to a home location register (358) associated with the mobile called party (160) and receiving a roaming number for that mobile called party (160); and
- from the fixed network switch (302A) serving the calling party (110), directly routing the call to a mobile network switch (352A) currently serving the mobile called party (160) based on the roaming number.

2. The method according to claim 1, wherein the step of determining if the called party is a mobile called party further comprises the step of forwarding the call to another fixed network switch when the fixed network switch (302A) serving the calling party (110) is not configured for determining if the called party a mobile called party served by the mobile network section (350).

3. The method according to any of the claims 1 or 2, wherein the step of determining if the called party is a mobile called party comprises:
- at the fixed network switch, querying a database in which all mobile called party addresses are marked as "potentially ported"; and
- treating a mobile called party address as a called party address subject to number portability procedures by routing signaling messages associated with the establishment of the call to a number portability server (320, 340).

4. The method according to claim 3, wherein the number portability server is an enhanced number portability server capable of initiating queries to and receiving responses from a home location register (358) of the mobile network section (350).

5. The method according to any of the claims 3 or 4, wherein the enhanced number portability server is a signaling transfer point (320) connected to or comprising a number portability database (340).

6. The method according to any of the claims 1 or 2, wherein the step determining if the called party is a mobile called party comprises:
- querying a database in which all mobile called party addresses are marked as addresses requiring intelligent network handling; and
- treating a mobile called party address as a called party address subject to intelligent network procedures by routing signaling messages associated with the establishment of the call to an intelligent network service control point.

7. The method according to claim 6, wherein the intelligent network service control point is capable of initiating queries to and receiving responses from a home location register (358) of the mobile network section (350).

8. A Signaling Transfer Point STP (320) of a SS7 network, comprising means for bidirectionally connecting to a plurality of SS7 links (306, 356), each of said SS7 links linking the STP (320) to other SS7 entities (302, 352, 358), **characterized by**:
- means for receiving a number portability query from a fixed network section (300) of the network;
- means for querying a number portability database (340) for determining if a called party address received in a number portability query is a mobile called party (160) served by a mobile network section (350) of the network;
- in response to determining that the called party is a mobile called party (160), initiating a query to a home location register (358) associated with the mobile called party (160) and receiving a roaming number for that mobile called party (160); and
- returning the roaming number as a response to the number portability query.

9. The STP (320) according to claim 6, further comprising the number portability database (340).

10. A network arrangement for a communications network, comprising:
- a fixed network section (300), the fixed network section (300) comprising: a plurality of subscriber terminals (110); a plurality of fixed network switches (302); voice connections (304) for interconnecting the fixed network switches (302); and signaling connections (306) for connecting the fixed network switches to at least one signaling transfer point (320);
- a mobile network section (350), the mobile network section (350) comprising: a plurality of mobile subscriber terminals (160); a plurality of mobile network switches (352); voice connections (354) for interconnecting the mobile network switches (352); a home location register (358); and signaling connections (356) for connecting the mobile network switches (352) and the home location register (358) to at least one signaling transfer point (320);
**characterized in that**:
- the fixed network section (300) further comprises a fixed network node capable of initiating queries to and receiving responses from the home location register (358) of the mobile network section (350);
- at least one of the fixed network switches (302) comprises: means for determining if a call originating in the fixed network section is terminating in the mobile network section; means for routing signaling messages associated with the establishment of a call terminating in the mobile network section (350) to said fixed network node for obtaining a roaming number for completing the call; and means for directly routing the call to a mobile network switch (352A) currently serving a mobile called party (160) based on the roaming number.

11. The network arrangement according to claim 10, wherein all fixed network switches (302) comprise: means for determining if a call originating in the fixed network section is terminating in the mobile network section; means for routing signaling messages associated with the establishment of a call terminating in the mobile network section (350) to said fixed network node for obtaining a roaming number for completing the call; and means for directly routing the call to a mobile network switch (352A) currently serving a mobile called party (160) based on the roaming number.

12. The network arrangement according to any of the claims 10 or 11, wherein, at the fixed network switches, the means for determining if a call originating in the fixed network section is terminating in the mobile network section comprise a database in which all mobile called party addresses are marked as "potentially ported"; and wherein the fixed network node capable of initiating queries to and receiving responses from the home location register (358) of the mobile network section (350) is comprised of the signaling transfer point (320) and a number portability database (340).

13. The network arrangement according to any of the claims 10 to 12, wherein the signaling transfer point (320) comprises a signaling transfer point according to claim 8.

14. The network arrangement according to any of the claims 10 or 11, wherein, at the fixed network switches, the means for determining if a call originating in the fixed network section is terminating in the mobile network section comprise a database in which all mobile called party addresses are marked as addresses requiring intelligent network handling; and wherein the fixed network node capable of initiating queries to and receiving responses from the home location register (358) of the mobile network section (350) is comprised of an intelligent network service control point capable of initiating queries to and receiving responses from a home location register (358) of the mobile network section (350).

## Patentansprüche

1. Verfahren zum Verbindungsaufbau in einem Kommunikationsnetz, welches einen Festnetzteil (300) und einen Mobilfunknetzteil (350) umfasst, wobei das Verfahren die folgenden Schritte beinhaltet:
- in dem Festnetzteil (300) des besagten Kommunikationsnetzes Empfangen einer Adresse eines gerufenen Teilnehmers von einem rufenden Teilnehmer (110), welcher durch einen Schaltknoten (302A) des Festnetzes versorgt wird;
- Ermitteln, ob es sich bei dem gerufenen Teilnehmer, der durch die besagte Adresse des gerufenen Teilnehmers bezeichnet wird, um einen gerufenen Mobilfunk-Teilnehmer (160) handelt, welcher von dem Mobilfunknetzteil (350) des Kommunikationsnetzes versorgt wird;
**gekennzeichnet durch** die folgenden Schritte:
- in Reaktion auf die Feststellung, dass der gerufene Teilnehmer ein gerufener Mobilfunk-Teilnehmer (160) ist, Lenken von Signalisierungsnachrichten, die mit dem Aufbau der Verbindung in Zusammenhang stehen, an einen Festnetzknoten, welcher in der Lage ist, Anfragen bei einer Heimatdatei HLR (358) des Mobilfunknetzteils (350) zu veranlassen und Antworten von dort zu empfangen;
- an dem besagten Netzknoten des Festnetzteils Veranlassen einer Anfrage bei einer Heimatdatei HLR (358), die dem gerufenen Mobilfunk-Teilnehmer (160) zugeordnet ist, und Empfangen einer Roaming-Nummer für diesen gerufenen Mobilfunk-Teilnehmer (160); und
- von dem Schaltknoten (302A) des Festnetzes, der den rufenden Teilnehmer (110) versorgt, direktes Lenken des Anrufs an einen Schaltknoten (352A) des Mobilfunknetzes, welcher aktuell den gerufenen Mobilfunk-Teilnehmer (160) versorgt, auf der Grundlage der Roaming-Nummer.

2. Verfahren gemäß Anspruch 1, wobei der Schritt des Ermittelns, ob der gerufene Teilnehmer ein gerufener Mobilfunk-Teilnehmer ist, ferner den Schritt umfasst, den Anruf an einen anderen Schaltknoten des Festnetzes weiterzuleiten, wenn der Schaltknoten (302A) des Festnetzes, der den rufenden Teilnehmer (110) versorgt, nicht dafür konfiguriert ist, festzustellen, ob der gerufene Teilnehmer ein gerufener Mobilfunk-Teilnehmer ist, der von dem Mobilfunknetzteil (350) versorgt wird.

3. Verfahren gemäß einem der Ansprüche 1 oder 2, wobei der Schritt des Ermittelns, ob der gerufene Teilnehmer ein gerufener Mobilfunk-Teilnehmer ist, Folgendes umfasst:
- an dem Schaltknoten des Festnetzes Anfragen bei einer Datenbank, in der alle Adressen von gerufenen Mobilfunk-Teilnehmern als "potenziell portiert" **gekennzeichnet** sind; und
- Behandeln einer Adresse eines gerufenen Mobilfunk-Teilnehmers wie eine Adresse eines gerufenen Teilnehmers, die Rufnummernmitnahme-Prozeduren unterliegt, indem Signalisierungsnachrichten, die mit dem Aufbau der Verbindung in Zusammenhang stehen, an einen Rufnummernmitnahme-Server (320, 340) geleitet werden.

4. Verfahren gemäß Anspruch 3, wobei der Rufnummernmitnahme-Server ein erweiterter Rufnummernmitnahme-Server ist, welcher in der Lage ist, Anfragen bei einer Heimatdatei HLR (358) des Mobilfunknetzteils (350) zu veranlassen und Antworten von dort zu empfangen.

5. Verfahren gemäß einem der Ansprüche 3 oder 4, wobei der erweiterte Rufnummernmitnahme-Server ein Signalisierungstransferpunkt STP (320) ist, welcher mit einer Rufnummernmitnahme (NP) -Datenbank (340) verbunden ist oder eine solche Datenbank beinhaltet.

6. Verfahren gemäß einem der Ansprüche 1 oder 2, wobei der Schritt des Ermittelns, ob der gerufene Teilnehmer ein gerufener Mobilfunk-Teilnehmer ist, Folgendes umfasst:
- Anfragen bei einer Datenbank, in der alle Adressen gerufener Mobilfunk-Teilnehmer als Adressen **gekennzeichnet** sind, die eine "Intelligentes Netz" (IN) -Verarbeitung erfordern; und
- Behandeln einer Adresse eines gerufenen Mobilfunk-Teilnehmers wie eine Adresse eines gerufenen Teilnehmers, die "Intelligentes Netz"-Prozeduren unterliegt, indem Signalisierungsnachrichten, die mit dem Aufbau der Verbindung in Zusammenhang stehen, an einen "Intelligentes Netz"-Dienststeuerungspunkt SCP geleitet werden.

7. Verfahren gemäß Anspruch 6, wobei der "Intelligentes Netz" (IN) -Dienststeuerungsspunkt SCP in der Lage ist, Anfragen bei einer Heimatdatei HLR (358) des Mobilfunknetzteils (350) zu veranlassen und Antworten von dort zu empfangen.

8. Signalisierungstransferpunkt STP (320) eines SS7-Netzes, welcher Mittel umfasst, um bidirektional mit einer Mehrzahl von SS7-Kanälen (306, 356) verbunden zu werden, wobei jeder dieser besagten SS7-Kanäle den Signalisierungstransferpunkt STP (320) mit anderen SS7-Einheiten (302, 352, 358) verbindet, **gekennzeichnet durch**:
- Mittel zum Empfangen einer Rufnummernmitnahme-Anfrage von einem Festnetzteil (300) des Netzes;
- Mittel zum Anfragen bei einer Rufnummernmitnahme (NP) - Datenbank (340), um zu ermitteln, ob eine Adresse eines gerufenen Teilnehmers, die in einer Rufnummernmitnahme-Anfrage empfangen wurde, ein gerufener Mobilfunk-Teilnehmer (160) ist, der von einem Mobilfunknetzteil (350) des Netzes versorgt wird;
- in Reaktion auf die Feststellung, dass der gerufene Teilnehmer ein gerufener Mobilfunk-Teilnehmer (160) ist, Veranlassen einer Anfrage bei einer Heimatdatei HLR (358), die dem gerufenen Mobilfunk-Teilnehmer (160) zugeordnet ist, und Empfangen einer Roaming-Nummer für diesen gerufenen Mobilfunk-Teilnehmer (160); und
- Zurückgeben der Roaming-Nummer als Antwort auf die Rufnummernmitnahme-Anfrage.

9. Signalisierungstransferpunkt STP (320) gemäß Anspruch 6, welcher ferner die Rufnummernmitnahme (NP) -Datenbank (340) enthält.

10. Netzwerkanordnung für ein Kommunikationsnetz, welche Folgendes umfasst:
- einen Festnetzteil (300), wobei der Festnetzteil (300) Folgendes beinhaltet: eine Mehrzahl von Teilnehmer-Endgeräten (110); eine Mehrzahl von Schaltknoten (302) des Festnetzes; Sprachverbindungen (304) zum Verbinden der Schaltknoten (302) des Festnetzes untereinander; und Signalisierungsverbindungen (306) zum Verbinden der Schaltknoten des Festnetzes mit mindestens einem Signalisierungstransferpunkt STP (320);
- einen Mobilfunknetzteil (350), wobei der Mobilfunknetzteil (350) Folgendes beinhaltet: eine Mehrzahl von mobilen Teilnehmer-Endgeräten (160); eine Mehrzahl von Schaltknoten (352) des Mobilfunknetzes; Sprachverbindungen (354) zum Verbinden der Schaltknoten (352) des Mobilfunknetzteils untereinander; eine Heimatdatei HLR (358); und Signalisierungsverbindungen (356) zum Verbinden der Schaltknoten (352) des Mobilfunknetzes und der Heimatdatei HLR (358) mit mindestens einem Signalisierungstransferpunkt STP (320);
**dadurch gekennzeichnet, dass**:
- der Festnetzteil (300) ferner einen Schaltknoten des Festnetzes beinhaltet, der in der Lage ist, Anfragen bei der Heimatdatei HLR (358) des Mobilfunknetzteils (350) zu veranlassen und Antworten von dort zu empfangen;
- mindestens einer der Schaltknoten (302) des Festnetzes Folgendes umfasst: Mittel zum Feststellen, ob eine im Festnetzteil eingeleitete Verbindung im Mobilfunknetzteil endet; Mittel zum Lenken von Signalisierungsnachrichten, die im Zusammenhang mit dem Aufbau einer Verbindung in den Mobilfunknetzteil (350) stehen, an den besagten Festnetzknoten, um eine Roaming-Nummer für die Herstellung der Verbindung zu erhalten; und Mittel zum direkten Lenken des Anrufs an einen Schaltknoten (352A) des Mobilfunknetzes, welcher aktuell einen gerufenen Mobilfunk-Teilnehmer (160) versorgt, auf der Grundlage der Roaming-Nummer.

11. Netzwerkanordnung gemäß Anspruch 10, wobei alle Schaltknoten (302) des Festnetzes Folgendes umfassen: Mittel zum Feststellen, ob eine im Festnetzteil eingeleitete Verbindung im Mobilfunknetzteil endet; Mittel zum Lenken von Signalisierungsnachrichten, die im Zusammenhang mit dem Aufbau einer Verbindung in den Mobilfunknetzteil (350) stehen, an den besagten Festnetzknoten, um eine Roaming-Nummer für die Herstellung der Verbindung zu erhalten; und Mittel zum direkten Lenken des Anrufs an einen Schaltknoten (352A) des Mobilfunknetzes, welcher aktuell einen gerufenen Mobilfunk-Teilnehmer (160) versorgt, auf der Grundlage der Roaming-Nummer.

12. Netzwerkanordnung gemäß einem der Ansprüche 10 oder 11, wobei in den Schaltknoten des Festnetzes das Mittel zum Feststellen, ob eine im Festnetzteil eingeleitete Verbindung im Mobilfunknetzteil endet, eine Datenbank umfasst, in der alle Adressen von gerufenen Mobilfunk-Teilnehmern als "potenziell portiert" **gekennzeichnet** sind; und wobei der Festnetzknoten, der in der Lage ist, Anfragen bei einer Heimatdatei HLR (358) des Mobilfunknetzteils (350) zu veranlassen und Antworten von dort zu empfangen, den Signalisierungstransferpunkt STP (320) und eine Rufnummernmitnahme (NP) -Datenbank (340) umfasst.

13. Netzwerkanordnung gemäß einem der Ansprüche 10 bis 12, wobei der Signalisierungstransferpunkt STP (320) einen Signalisierungstransferpunkt STP gemäß Anspruch 8 umfasst.

14. Netzwerkanordnung gemäß einem der Ansprüche 10 oder 11, wobei in den Schaltknoten des Festnetzes das Mittel zum Feststellen, ob eine im Festnetzteil eingeleitete Verbindung im Mobilfunknetzteil endet, eine Datenbank umfasst, in der alle Adressen von gerufenen Mobilfunk-Teilnehmern als Adressen **gekennzeichnet** sind, die eine "Intelligentes Netz" (IN)
- Verarbeitung erfordern; und wobei der Festnetzknoten, der in der Lage ist, Anfragen bei einer Heimatdatei HLR (358) des Mobilfunknetzteils (350) zu veranlassen und Antworten von dort zu empfangen, einen "Intelligentes Netz" (IN)
- Dienststeuerungspunkt SCP umfasst, der in der Lage ist, Anfragen bei einer Heimatdatei HLR (358) des Mobilfunknetzteils (350) zu veranlassen und Antworten von dort zu empfangen.

## Revendications

1. Procédé pour établir des appels dans un réseau de communications comprenant une section de réseau fixe (300) et une section de réseau mobile (350), le procédé comprenant les étapes consistant à :
- dans la section de réseau fixe (300) dudit réseau de communications, recevoir l'adresse d'une partie appelée d'une partie appelante (110) servie par un commutateur de réseau fixe (302A) ;
- déterminer si une partie appelée adressée par ladite adresse de partie appelée est une partie appelée mobile (160) servie par la section de réseau mobile (350) du réseau de communications ;
**caractérisé par** les étapes consistant à :
- en réponse à la détermination que la partie appelée est une partie appelée mobile (160), acheminer les messages de signalisation associés à l'établissement de l'appel à un noeud de réseau fixe capable d'initier des requêtes à un et de recevoir des réponses d'un enregistreur de localisation nominal (358) de la section de réseau mobile (350) ;
- au niveau dudit noeud de réseau fixe, initier une requête à un enregistreur de localisation nominal (358) associé avec la partie appelée mobile (160) et recevoir un numéro d'itinérance pour cette partie appelée mobile (160) ; et
- à partir du commutateur de réseau fixe (302A) servant la partie appelante (110), acheminer directement l'appel vers un commutateur de réseau mobile (352A) servant actuellement la partie appelée mobile (160) sur la base du numéro d'itinérance.

2. Procédé selon la revendication 1, dans lequel l'étape de détermination si la partie appelée est une partie appelée mobile comprend en outre l'étape consistant à envoyer l'appel à un autre commutateur de réseau fixe lorsque le commutateur de réseau fixe (302A) servant la partie appelante (110) n'est pas configuré pour déterminer si la partie appelée est une partie appelée mobile servie par la section de réseau mobile (350).

3. Procédé selon l'une quelconque des revendications 1 ou 2, dans lequel l'étape de détermination si la partie appelée est une partie appelée mobile comprend :
- au niveau du commutateur de réseau fixe, interroger une base de données dans laquelle toutes les adresses de parties appelées mobiles sont marquées comme étant « potentiellement portées » ; et
- traiter une adresse de partie appelée mobile en tant qu'adresse de partie appelée soumise à des procédures de portabilité de numéro en acheminant les messages de signalisation associés avec l'établissement de l'appel à un serveur de portabilité de numéros (320, 340).

4. Procédé selon la revendication 3, dans lequel le serveur de portabilité de numéros est un serveur de portabilité de numéros amélioré capable d'initier des requêtes à un et de recevoir des réponses d'un enregistreur de localisation nominal (358) de la section de réseau mobile (350).

5. Procédé selon l'une quelconque des revendications 3 ou 4, dans lequel le serveur de portabilité de numéros amélioré est un point de transfert de signalisation (320) connecté à ou comprenant une base de données de portabilité de numéros (340).

6. Procédé selon l'une quelconque des revendications 1 ou 2, dans lequel l'étape de détermination si la partie appelée est une partie appelée mobile comprend les étapes consistant à :
- interroger une base de données dans laquelle toutes les adresses de parties appelées mobiles sont marquées en tant qu'adresses nécessitant une gestion intelligente du réseau ; et
- traiter une adresse de partie appelée mobile en tant qu'adresse de partie appelée soumise à des procédures de réseau intelligentes en acheminant les messages de signalisation associés avec l'établissement de l'appel à un point de contrôle de services de réseau intelligent.

7. Procédé selon la revendication 6, dans lequel le point de contrôle de services de réseau intelligent est capable d'initier des requêtes à un et de recevoir des réponses d'un enregistreur de localisation nominal (358) de la section de réseau mobile (350).

8. Point de transfert de signalisation STP (signaling transfer point) (320) d'un réseau SS7, comprenant un moyen pour se connecter bidirectionnellement à une pluralité de liaisons SS7 (306, 356), chacune desdites liaisons SS7 reliant le STP (320) à d'autres entités SS7 (302, 352, 358), **caractérisé par** :
- un moyen pour recevoir une requête de portabilité de numéro d'une section de réseau fixe (300) du réseau ;
- un moyen pour interroger une base de données de portabilité de numéros (340) pour déterminer si une adresse de partie appelée reçue dans une demande de portabilité de numéro est une partie appelée mobile (160) servie par une section de réseau mobile (350) du réseau ;
- en réponse à la détermination que la partie appelée est une partie appelée mobile (160), initier une requête à un enregistreur de localisation nominal (358) associé avec la partie appelée mobile (160) et recevoir un numéro d'itinérance pour cette partie appelée mobile (160) ; et
- renvoyer le numéro d'itinérance en tant que réponse à la requête de portabilité de numéro.

9. STP (320) selon la revendication 6, comprenant en outre la base de données de portabilité de numéros (340).

10. Agencement de réseau pour un réseau de communications, comprenant :
- une section de réseau fixe (300), la section de réseau fixe (300) comprenant : une pluralité de terminaux d'abonnés (110) ; une pluralité de commutateurs de réseau fixe (302) ; des connexions voix (304) pour interconnecter les commutateurs de réseau fixe (302) ; et des connexions de signalisation (306) pour connecter les commutateurs de réseau fixe à au moins un point de transfert de signalisation (320) ;
- une section de réseau mobile (350), la section de réseau mobile (350) comprenant : une pluralité de terminaux d'abonnés mobiles (160) ; une pluralité de commutateurs de réseau mobile (352) ; des connexions voix (354) pour interconnecter les commutateurs de réseau mobile (352) ; un enregistreur de localisation nominal (358) ; et des connexions de signalisation (356) pour connecter les commutateurs de réseau mobile (352) et l'enregistreur de localisation nominal (358) à au moins un point de transfert de signalisation (320) ;
**caractérisé en ce que** :
- la section de réseau fixe (300) comprend en outre un noeud de réseau fixe capable d'initier des requêtes à et de recevoir des réponses de l'enregistreur de localisation nominal (358) de la section de réseau mobile (350) ;
- au moins l'un des commutateurs de réseau fixe (302) comprend : un moyen pour déterminer si un appel ayant son origine dans la section de réseau fixe aboutit dans la section de réseau mobile ; un moyen pour acheminer les messages de signalisation associés avec l'établissement d'un appel aboutissant dans une section de réseau mobile (350) vers ledit noeud de réseau fixe pour obtenir un numéro d'itinérance pour faire aboutir l'appel ; et un moyen pour acheminer directement l'appel à un commutateur de réseau mobile (352A) servant actuellement une partie appelée mobile (160) sur la base du numéro d'itinérance.

11. Agencement de réseau selon la revendication 10, dans lequel tous les commutateurs de réseau fixe (302) comprennent : un moyen pour déterminer si un appel ayant son origine dans la section de réseau fixe aboutit dans la section de réseau mobile ; un moyen pour acheminer les messages de signalisation associés avec l'établissement d'un appel aboutissant dans la section de réseau mobile (350) vers ledit noeud de réseau fixe pour obtenir un numéro d'itinérance pour faire aboutir l'appel ; et un moyen pour acheminer directement l'appel à un commutateur de réseau mobile (352A) servant actuellement une partie appelée mobile (160) sur la base du numéro d'itinérance.

12. Agencement de réseau selon l'une quelconque des revendications 10 ou 11, dans lequel, au niveau des commutateurs de réseau fixe, le moyen pour déterminer si un appel ayant son origine dans la section de réseau fixe aboutit dans la section de réseau mobile comprend une base de données dans laquelle toutes les adresses de parties appelées mobiles sont marquées comme étant « potentiellement portées » ; et dans lequel le noeud de réseau fixe capable d'initier des requêtes à et de recevoir des réponses de l'enregistreur de localisation nominal (358) de la section de réseau mobile (350) est composé du point de transfert de signalisation (320) et d'un certain nombre de bases de données de portabilité (340).

13. Agencement de réseau selon l'une quelconque des revendications 10 à 12, dans lequel le point de transfert de signalisation (320) comprend un point de transfert de signalisation selon la revendication 8.

14. Agencement de réseau selon l'une quelconque des revendications 10 ou 11, dans lequel, au niveau des commutateurs de réseau fixe, le moyen pour déterminer si un appel ayant son origine dans la section de réseau fixe aboutit dans la section de réseau mobile comprend une base de données dans laquelle toutes les adresses de parties appelées mobiles sont marquées en tant qu'adresses nécessitant une gestion de réseau intelligente ; et dans lequel le noeud de réseau fixe capable d'initier des requêtes à et de recevoir des réponses de l'enregistreur de localisation nominal (358) de la section de réseau mobile (350) est composé d'un point de contrôle de services de réseau intelligent capable d'initier des requêtes à et de recevoir des réponses d'un enregistreur de localisation nominal (358) de la section de réseau mobile (350).
